# EUROPEAN PATENT APPLICATION

(11) **EP 4 026 613 A1**
(43) Date of publication of application: **13.07.2022**
(21) Application number: 20861655.7
(22) Date of filing: 31.08.2020
(51) Int. Cl.: B01J 35/02, B01J 35/04, B01J 21/00, B01J 21/06, B01J 8/00, B01J 8/02

(54) **INERT POROUS MEDIUM REACTOR FOR COMBUSTION OR GASIFICATION COMPRISING A PLURALITY OF HOLLOW SPHERES OF INERT MATERIAL**

(30) Priority: 02.09.2019 CL 20192517
(71) Applicant: Universidad Técnica Federico Santa María, Valparaiso (CL)
(72) Inventor: TOLEDO TORRES, Mario Gonzalo, Viña del Mar (CL); RIPOLL KAMEID, Nicolás Alberto Andrés, Buenos Aires (CL); RUIZ NÚÑEZ, Gustavo Andrés, Santiago (CL)
(74) Representative: Ungria López, Javier
(86) International application number: PCT/CL2020/050097
(87) International publication number: WO 2021/042223

(57) **Abstract**

The present invention relates to the field of apparatus and processes for combustion or gasification and in particular provides an inert porous medium reactor for combustion or gasification comprising a reaction tube, said reaction tube having an inner lining of a first thermal insulating material and an outer lining of a second thermal insulating material; said reactor further comprising a plurality of particles of inert material inside said reaction tube characterized in that said particles of inert material are hollow and in that said hollow particles of inert material occupy the entire length of said reaction tube.

## Description

### Technical field of the invention

The present invention relates to the field of apparatus and processes for combustion or gasification and in particular provides an inert porous medium reactor for combustion or gasification comprising a plurality of hollow particles of inert material.

### Background of the invention

Porous medium reactors for combustion or gasification of materials have been described in the state of the art.

For example, patent CL 56038 describes an inert porous medium reactor comprising a reaction tube internally and externally coated with a thermal insulator; and a plurality of particles of chemically inert material, specifically alumina spheres, placed inside said tube. The reactor described in this document operates on the basis of a homogeneous and random mixture of non-inert material and the inert material, which is gasified as a result of combustion with partial oxidation.

Patent CL 50692 describes an inert porous medium reactor comprising a reaction tube internally and externally coated with a thermal insulator; and a plurality of particles of chemically inert material, specifically alumina spheres, placed inside said tube. The reactor described in this document operates based on the combustion of methanol, ethanol, and other liquid fuels of similar characteristics, for the generation of hydrogen (H₂) and carbon monoxide (CO) by means of the partial oxidation of the fuel.

Internationally, document WO 2017/142515 describes a multi-stage system for the production of gas, e.g., a mixture of H₂ and CO, from carbonaceous material, e.g., solid waste. Said system includes at least one first reactor and at least a second reactor, wherein heat from the second reactor is used to heat a medium to be used as a reactant in the first reactor. It is indicated that both said first reactor and said second reactor may include a particulate material for heat transfer in their interior.

However, the state-of-the-art documents are based on conduction heat transfer for their operation. This limits the range of temperatures that said reactors can reach. Additionally, the inert material used for heat transfer, being conductive, cannot be used as an insulator in the proximity of the ends of the reaction tube.

Consequently, an inert porous medium reactor is required to overcome these deficiencies of the prior art.

### Summary of the invention

The present invention provides an inert porous medium reactor for the combustion or gasification of a material comprising a reaction tube, said reaction tube having an inner lining of a first thermal insulating material and an outer lining of a second thermal insulating material; said reactor further comprising a plurality of particles of inert material inside said reaction tube which is characterized in that said particles of inert material are hollow and in that said hollow particles of inert material occupy the entire length of said reaction tube.

In a preferred embodiment, the reactor is characterized in that said reaction tube is made of a high temperature resistant material which is selected from the group consisting of quartz, steels, iron, as well as combinations thereof.

In another preferred embodiment, the reactor is characterized in that said first thermal insulating material and said second thermal insulating material are selected from the group consisting of glass fiber, ceramic fiber, as well as combinations thereof.

In a further preferred embodiment, the reactor is characterized in that said first thermal insulating material is the same material as said second thermal insulating material.

In another preferred embodiment, the reactor is characterized in that said inert material is selected from the group consisting of alumina oxides, zirconium, silicon, as well as combinations thereof.

In a preferred embodiment, the reactor is characterized in that said hollow particles of inert material have an equivalent diameter which is in the range between 3 mm and 100 mm.

In another preferred embodiment, the reactor is characterized in that said hollow particles of inert material have a wall whose thickness is between 1% and 10% of the equivalent diameter of said hollow particles of inert material.

In a further preferred embodiment, the reactor is characterized in that said reaction tube has an internal diameter which is in the range between 30 mm and 1000 mm.

In another preferred embodiment, the reactor is characterized in that said reaction tube has a length which is in the range between 300 mm and 1500 mm.

In a further preferred embodiment, the reactor is characterized in that it additionally comprises a plurality of particles of carbonaceous material which are randomly distributed along said reaction tube.

### Brief description of the figures

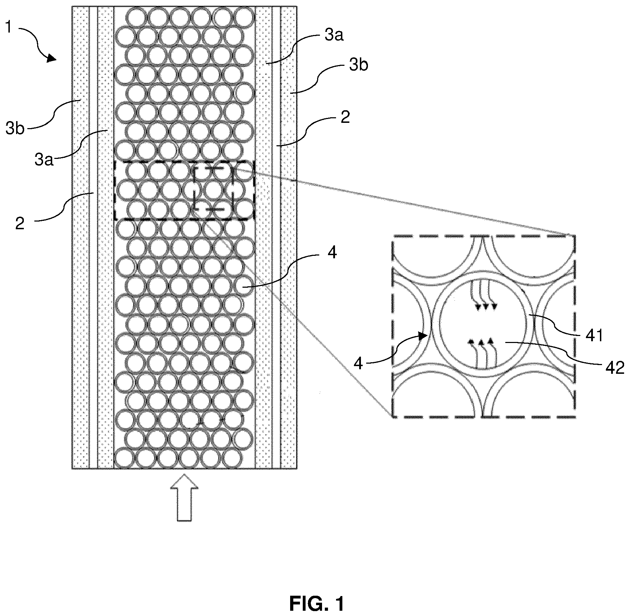

FIG. 1 shows a schematic view in longitudinal section of a first embodiment of the inert porous medium reactor which is the object of the present invention, with a detail view of the hollow particles forming the same.

### Detailed description of the invention

The present invention will be described in detail referring, for this purpose, to the figures accompanying the present application.

The present invention provides an inert porous medium reactor (1) for the combustion or gasification of a material characterized in that it comprises, essentially, a reaction tube (2), said reaction tube (2) having an inner lining (3a) of a first thermal insulating material and an outer lining (3b) of a second thermal insulating material; wherein said reactor (1) further comprises a plurality of particles of inert material (4) inside said reaction tube (2), wherein said particles of inert material (4) are hollow and wherein said hollow particles of inert material (4) occupy the entire length of said reaction tube (2).

In the context of the present invention, it is to be understood that the reactor (1) which is the object of the present invention may be used for both the combustion and gasification of a material. In a preferred embodiment, the combustion or partial oxidation may be of either a gaseous or liquid fuel, and said material is a solid combustible material.

The inert porous medium reactor (1) which is the object of the present invention is an improvement with respect to other reactors described in the state of the art, in that it allows heat transfer by radiation, as will be explained in detail below. This difference in the heat transfer mechanism is not trivial and is advantageous in that it allows higher temperatures to be reached inside the reactor (1) which is the object of the present invention.

With respect to said reaction tube (2), the material from which said reaction tube (2) is manufactured does not limit the scope of the present invention, as long as it allows withstanding the temperatures reached inside said reaction tube (2). In a preferred embodiment, without limiting the scope of the present invention, said reaction tube (2) is manufactured with a material resistant to high temperatures which is selected from the group consisting of quartz, steels, iron, as well as combinations thereof.

Moreover, the shape and dimensions of said reaction tube (2) do not limit the scope of the present invention. Said reaction tube (2) may have a cross-section in any shape. In a preferred embodiment, without limiting the scope of the present invention, said reaction tube (2) has a cross-section in a circular shape. However, in other preferred embodiments, without limiting the scope of the present invention, said reaction tube (2) may have a cross-section in a polygonal, concave, or convex shape, which may be chosen, without limiting to these, from the group consisting of triangular, square, pentagonal, hexagonal, or octagonal cross-section.

As mentioned above, the dimensions of said reaction tube (2) also do not limit the scope of the present invention and will depend, among other aspects and without limiting the scope of the present invention, on the specific application of the reactor (1) which is the object of the present invention, as well as on the dimensions of the hollow particles of inert material (4) placed inside said reaction tube (2). In the preferred embodiment in which said reaction tube (2) has a circular-shaped cross-section, both the internal and external diameters of said reaction tube (2) do not limit the scope of the present invention. Similarly, when said reaction tube (2) has a polygonal-shaped cross-section, the width of said reaction tube (2) and the thickness of the walls of said reaction tube (2) do not limit the scope of the present invention. In a preferred embodiment, without limiting the scope of the present invention, when said reaction tube (2) has a circular-shaped cross-section, its external diameter may be in the range between 34 mm and 1004 mm, while its internal diameter may be in the range between 30 mm and 1000 mm.

Moreover, the length of said reaction tube (2) does not limit the scope of the present invention. The length of said reaction tube (2) will depend, among other aspects and without limiting the scope of the present invention, on the dimensions of the hollow particles of inert material (4) placed inside said reaction tube (2), on the material to be combusted or gasified, as well as on the temperatures reached inside said reaction tube (2). In a preferred embodiment, without limiting the scope of the present invention, the length of said reaction tube (2) is in the range between 300 mm and 1500 mm.

Said reaction tube (2) has an inner lining (3a) of a first thermal insulating material. The nature of said first thermal insulating material does not limit the scope of the present invention. Said first thermal insulating material must allow to thermally insulate the inside of said reaction tube (2) from the outside thereof. Additionally, said first thermal insulating material must be inert with respect to the combustion or gasification reaction taking place inside said reaction tube (2). Said first thermal insulating material may be selected, for example and without limiting the scope of the present invention, from the group consisting of alumina oxides, zirconium, silicon, as well as combinations thereof.

The thickness of said inner coating (3a) does not limit the scope of the present invention and will depend, among other aspects and without limiting the scope of the present invention, on the shape and dimensions of said reaction tube (2), on the thermal characteristics of said first thermal insulating material, and on the temperatures reached inside said reaction tube (2).

Said reaction tube (2), on the other hand, has an outer coating (3b) of a second thermal insulating material. The nature of said second thermal insulating material does not limit the scope of the present invention. Said second thermal insulating material must allow to thermally insulate the outside of said reaction tube (2). Said second thermal insulating material may be selected, for example and without limiting the scope of the present invention, from the group consisting of alumina oxides, zirconium, silicon, as well as combinations thereof.

The thickness of said outer coating (3a) does not limit the scope of the present invention and will depend, among other aspects and without limiting the scope of the present invention, on the shape and dimensions of said reaction tube (2), on the thermal characteristics of said second thermal insulating material, and on the temperatures reached inside said reaction tube (2).

In a preferred embodiment, without limiting the scope of the present invention, said first thermal insulating material is the same as said second thermal insulating material. The foregoing is advantageous in that it can simplify the manufacturing process of the reactor (1) which is the object of the present invention.

Said reactor (1) further comprises a plurality of hollow particles of inert material (4) inside said reaction tube (2). The characteristic that said particles of inert material (4) are hollow is what allows the heat transfer by radiation. This technical advantage is not described or suggested by the state of the art, where heat transfer is carried out by conduction between adjacent particles of inert material. Additionally, the presence of said hollow particles of inert material (4) allows to generate a lower thermal inertia, due to its lower mass, compared to solid particles. This allows it to have the thermal inertia of a ceramic sponge, while having the porosity of a bed of spheres. The foregoing provides the reactor (1) which is the object of the present invention with a higher combustion wave velocity for a reactor of the same size, as compared to solid particles. This, in turn, translates into higher reaction rates in the combustion and gasification processes.

With respect to said hollow particles of inert material (4), said inert material does not limit the scope of the present invention, insofar as it is inert with respect to the reaction taking place inside the reactor (1) which is the object of the present invention. In a preferred embodiment, without limiting the scope of the present invention, said inert material is selected from the group consisting of alumina oxides, zirconium, silicon, as well as combinations thereof.

Moreover, the shape and dimensions of said hollow particles of inert material (4) do not limit the scope of the present invention. In general, it will be understood that said hollow particles of inert material (4) have a wall (41) and an inner space (42) that allows heat transfer by radiation, as schematically seen in Figure 1.

With respect to the shape of said hollow particles of inert material, the same does not limit the scope of the present invention and may be chosen, without being limited to these, from the group consisting of particles in the shape of spheres, ellipsoids, ovoids, polyhedrons, or irregularly shaped, as well as combinations thereof.

On the other hand, the dimensions of said hollow particles of inert material (4) do not limit the scope of the present invention. Said dimensions will depend, among other aspects and without limiting the scope of the present invention, on the shape and dimensions of the reaction tube (2), on the shape of said hollow particles of inert material (4), and on the temperatures reached inside said reaction tube (2). Moreover, said hollow particles of inert material (4) forming the plurality may have a uniform size, or have a size distribution without limiting the scope of the present invention. In case of having a size distribution, the particular distribution does not limit the scope of the present invention and may be selected, for example and without limiting the scope of the present invention, from normal distribution, log-normal distribution, multimodal distribution, among others.

In a preferred embodiment, without limiting the scope of the present invention, said hollow particles of inert material (4) have an equivalent diameter in the range between 3 mm and 100 mm. In the context of the present invention, without limiting the scope of the present invention, the equivalent diameter of a hollow particle of inert material (4) will be understood as the diameter of a sphere having the same volume as the outer volume of said hollow particle of inert material (4). In a more preferred embodiment, without limiting the scope of the present invention, said hollow particles of inert material (4) have an equivalent diameter in the range between 5 mm and 50 mm, more preferably between 10 mm and 25 mm.

Moreover, as previously mentioned, said hollow particles (4) have a wall (41) and an inner space (42). The dimensions of said wall (41) do not limit the scope of the present invention and will depend, for example and without limiting the scope of the present invention, on the equivalent diameter and shape of said hollow particles of inert material (4) and on the reaction temperatures. In a preferred embodiment, without limiting the scope of the present invention, said hollow particles of inert material (4) have a wall (41) whose thickness is between 1% and 10% of the equivalent diameter of said hollow particles of inert material (4).

Said plurality of hollow particles of inert material (4) occupy the entire length of said reaction tube (2). Said configuration has the advantage that the same material, namely, said hollow particles of inert material (4), is used as thermal insulating material at the ends of said reaction tube (2), while being used as a material for intensifying heat transfer in the reaction occurring inside said reaction tube (2). The same may have the particularity of a transient nature, that is, that the reaction moves axially along the reactor, or of a stationary nature, where the reaction occurs in a fixed zone inside the reaction tube, without limiting the scope of the present invention.

In a preferred embodiment, without limiting the scope of the present invention, the reactor (1) which is the object of the present invention, may be used for the gasification of solid carbonaceous material. In this preferred embodiment, without limiting the scope of the present invention, the reactor (1) which is the object of the present invention comprises, additionally, a plurality of particles of carbonaceous material which are randomly distributed along the reaction tube (2) forming part of said reactor (1). Said carbonaceous material may be chosen, for example and without limiting the scope of the present invention, from the group consisting of wood, coal, plastic, biomass, and papers. In this case, for example and without limiting the scope of the present invention, said reactor (1) may be positioned vertically or horizontally.

However, in other preferred embodiments, the reactor (1) which is the object of the present invention may be used for the combustion of combustible fluids. In this case, for example and without limiting the scope of the present invention, said reactor (1) may be positioned vertically, inclined, or horizontally. In any such case, the direction of flow does not limit the scope of the present invention and may be, for example, upward or downward. For example, and without limiting the scope of the present invention, Figure 1 shows a reactor (1) in which the fuel flow is upward.

In a more preferred embodiment, without limiting the scope of the present invention, the reactor (1) which is the object of the present invention may be used simultaneously for the gasification of a material and for the combustion or partial oxidation of a combustible fluid. The foregoing, as is known in the state of the art, allows to increase the proportion of synthesis gas obtained, as well as to decrease costs with respect to other methods known in the state of the art.

According to the previously detailed description it is possible to obtain an inert porous medium reactor (1) for the combustion or gasification of materials that allows to overcome the deficiencies of the state of the art.

It should be understood that the options described for different technical features may be combined with each other in any manner anticipated by a person skilled in the technical field, without limiting the scope of the present invention.

Hereinafter, examples of embodiments of the present invention will be described. It should be understood that such examples are intended to provide a better understanding of the present invention, but in no way limit the scope thereof.

Additionally, technical features described in different examples may be combined with each other, or with other technical features previously described, in any manner, anticipated by a person skilled in the technical field without limiting the scope of the present invention.

### Example 1: Construction of the inert porous medium reactor

A prototype of the inert porous medium reactor was manufactured, consisting of a 221 mm long cylindrical quartz tube with an inner and outer diameter of 64.8 mm and 68.8 mm, respectively. The inside of the cylindrical quartz tube was covered with a 3 mm thick glass fiber inner thermal insulator. The outside of the quartz cylindrical tube was protected with outer thermal insulator, made of the same material as the inner insulator, of a thickness of 30 mm. Then, the cylindrical quartz tube with its respective insulating walls was mounted on a metal aluminum piece, which had 12 holes of 1.5 mm in diameter through which combustible reactant gases could enter. The inert porous medium reactor is therefore positioned vertically.

In order to measure the temperature inside the reactor, a cylindrical ceramic with an outer diameter of 5 mm and a length of 560 mm, containing 6 holes of 0.8 mm, was positioned axially in the center of the cylindrical quartz tube and along the entire length of the porous medium reactor. An S-type thermocouple (platinum rhodium - 10%/platinum) was installed in each of these holes. Said thermocouples were positioned 30 mm equidistant from each other, wherein the first thermocouple was approximately 26 mm from the top of the inert porous medium reactor. Then, the inert porous medium reactor was filled with inert material of hollow alumina spheres of 3.5 to 5.5 mm outer diameter.

At the bottom of the aluminum metal piece of the reactor of the previous example, a "T" type connection medium was installed, to which, in addition, a digital air flow controller fed by a compressor and a digital fuel gas flow controller fed by a natural gas line were connected. In this way, an air - fuel gas premix is obtained and fed to the inert porous medium reactor.

At the top of the inert porous medium reactor, a Teflon and plastic line was installed and connected to a data acquisition system to obtain gas samples, which were analyzed through a Perkin Elmer gas chromatograph.

### Example 2: Use of the reactor for air-fuel gas reaction

The results of the air - fuel gas reaction using this prototype indicated that for combustion processes in a range of equivalence ratios of 0.8 to 1.2 for the air - fuel gas premix, combustion temperatures of 1280 K on average are reached, which are 240 K higher than the temperatures of the same reactor with solid alumina spheres.

### Example 3: Use of the reactor for gasification of solid fuel material

The same prototype of the previous examples was used for the gasification of solid fuel material. For this, the solid combustible material to be gasified having a similar size to the hollow alumina spheres was added.

For combustion processes in a range of solid fuel material fractions and alumina hollow spheres from 10% to 40%, combustion temperatures of 1280 K on average are reached, which are 130 K higher than the temperatures of the same reactor with solid alumina spheres. On the other hand, the production of synthesis gas, a mixture of hydrogen and carbon monoxide mainly, reaches a percentage of 2.5% higher compared to the same reactor with solid alumina spheres.

## Claims

1. An inert porous medium reactor (1) for the combustion or gasification of a material comprising a reaction tube (2), said reaction tube (2) having an inner lining (3a) of a first thermal insulating material and an outer lining (3b) of a second thermal insulating material; said reactor (1) further comprising a plurality of particles of inert material (4) inside said reaction tube (2), **CHARACTERIZED in that** said particles of inert material (4) are hollow and **in that** said hollow particles of inert material (4) occupy the entire length of said reaction tube (2).

2. The reactor (1) of claim 1, **CHARACTERIZED in that** said reaction tube (2) is made of a high temperature resistant material which is selected from the group consisting of quartz, steels, iron, as well as combinations thereof.

3. The reactor (1) of claim 1, **CHARACTERIZED in that** said first thermal insulating material and said second thermal insulating material are selected from the group consisting of alumina oxides, zirconium, silicon, as well as combinations thereof.

4. The reactor (1) of claim 1, **CHARACTERIZED in that** said first thermal insulating material is the same material as said second thermal insulating material.

5. The reactor (1) of claim 1, **CHARACTERIZED in that** said inert material is selected from the group consisting of alumina oxides, zirconium, silicon, as well as combinations thereof.

6. The reactor (1) of claim 1, **CHARACTERIZED in that** said hollow particles of inert material (4) have an equivalent diameter which is in the range between 3 mm and 100 mm.

7. The reactor (1) of claim 1, **CHARACTERIZED in that** said hollow particles of inert material (4) have a wall (41) whose thickness is between 1% and 10% of the equivalent diameter of said hollow particles of inert material (4).

8. The reactor (1) of claim 1, **CHARACTERIZED in that** said reaction tube (2) has an internal diameter which is in the range between 30 mm and 1000 mm.

9. The reactor (1) of claim 1, **CHARACTERIZED in that** said reaction tube (2) has a length that is in the range between 300 mm and 1500 mm.

10. The reactor (1) of claim 1, **CHARACTERIZED in that** it additionally comprises a plurality of particles of carbonaceous material which are randomly distributed along said reaction tube (2).
